# EUROPEAN PATENT SPECIFICATION

(11) **EP 1 593 894 B1**
(45) Date of publication and mention of the grant of the patent: **07.07.2010**
(21) Application number: 05100100.6
(22) Date of filing: 10.01.2005
(51) Int. Cl.: F16L 3/12, F16B 9/02

(54) **Fastening clamp for pipe**
Befestigungsklemme für Rohre
Pince de fixation pour tuyaux

(30) Priority: 05.05.2004 ES 200401073 U
(43) Date of publication of application: 09.11.2005
(73) Proprietor: Ceravalls Pujol, Ramon, 08211 Castellar del Valles (ES); Lopez Puche, Nuria, 08211 Castellar del Valles (ES)
(72) Inventor: Ceravalls Pujol, Ramon, 08211 Castellar del Valles (ES); Lopez Puche, Nuria, 08211 Castellar del Valles (ES)
(74) Representative: Ponti Sales, Adelaida

(56) References cited:
- WO-A-99/08032
- DE-U- 7 313 795
- NL-A- 8 902 580
- US-A- 5 478 033
- US-A1- 2003 164 430

## Description

The present invention refers to a clamp for pipes.

### BACKGROUND OF THE INVENTION

Clamps for pipes or the like which comprise a base for fixing it to a wall or to a support element and a pair of arms which are designed to be adapted to the profile of the pipe are known.

The arms of said clamps are designed in such a way that they have a semicircular portion, which holds the pipe, and a strut that connects and articulates each arm to the fixing base. Thanks to this configuration, said clamps allow that the arms are automatically closed when they are opened and the pipe is introduced.

This is achieved due to the fact that, when it is introduced, the pipe pushes the lower ends of the arms, thereby causing that the upper ends of the arms are moved closer to each other until they are blocked by means of an indentation that prevents them to be separated.

Said clamps allow a fast and easy fastening of the pipes, without need of having to use additional parts.

However, the described clamps have the disadvantage that before the pipe is introduced in the clamp, it is necessary to separate the arms to allow introducing the pipe, since if this operation is not carried out, one of the arms is bent inwards and does not allow introducing the pipe.

Therefore, to fix the pipe, two operations have to be carried out: separate the arms of the clamp, and introduce the pipe in the clamp.

On the other hand, this kind of clamps is not adapted to pipes that have small differences of diameters, so it is necessary to have a wide range of clamps for almost each diameter.

Such a clamp is disclosed by WO 99/08032.

### DESCRIPTION OF THE INVENTION

The aim of the present invention is to solve the disadvantages which have the known devices. The present invention is defined by claim 1.

Thanks to the characteristics of the invention, the pipe can be introduced directly in the clamp without need of having to separate the arms previously since, because of one of the arms is longer than the other, it forms an opening through which the pipe is slid.

On the other hand, the geometry of the clamp becomes asymmetric, this allows its arms to be adapted and to perform an effective fastening for a wider range of diameters of pipes.

The struts help fastening the pipe more efficiently, as they have a constant thickness all along its length. The configuration of the struts allows them acting as a hinging point and a pressure point at the same time, which facilitates that the arms tighten the pipe in a more effective way. This facilitates the arms to be adapted to different diameters of pipes.

Advantageously, the means for blocking both arms when they are closed comprise a plurality of teeth with a profile complementary to the profile of the teeth of the other arm. The teeth allow that the arms are blocked once the pipe has been introduced in the clamp and the arms are closed, and prevent the pipe from being released.

Also advantageously, the teeth have a longitudinal intermediate step for blocking transversal displacement between the arms. Said step improves the fitting of the teeth of both arms, preventing relative displacement between the two arms in the transversal direction and accidental apertures of the clamp.

According to an embodiment of the invention, the fixing base comprises means of attachment to a support element fixed to a wall or the like.

Preferably, the means of attachment comprise at least a lateral opening in said base which defines a tunnel including a pair of walls provided with longitudinal embossments, part of the support element resting fitted to said longitudinal embossments.

Advantageously, the longitudinal embossments comprise ribs.

According to another embodiment, the support element comprises a plate provided with an orifice coupled to a screw fixed to the wall or the like.

This metallic plate allows supporting the clamp with a screw in a more solid way without having to machine or form the base of the clamp for that purpose.

Advantageously, the support element comprises a plug which includes in one of its ends a perimeter groove for fitting it to said ribs by sliding it longitudinally along them.

Therefore, the clamp can be fixed quickly and easily without having to hammer or screw it to a wall or the like directly. It is only necessary to fit it to the plug which has already been fixed to the wall.

Preferably, the clamp comprises means for blocking the support element when it is attached to the fixing base.

According to an embodiment of the invention, the means for blocking the support element comprise a flexible flange applied against its end.

These blocking means fix the clamp solidly to the plug or screw fixed to the wall, preventing it from being released accidentally.

Advantageously, the means of attachment comprise a pair of longitudinal grooves located in both lateral sides of the fixing base for attaching it to a U-shaped profile or the like.

These grooves allow fixing the clamp by sliding it inside a U-shaped fixing profile, without need of using any additional accessory.

### BRIEF DESCRIPTION OF THE DRAWINGS

In order to assist the description of all that has been outlined above some drawings are attached which show schematically and solely by way of non-restrictive example a practical case of embodiment of the device for fixing pipes of the invention, in which:
Figure 1 is a side elevational view of the clamp;
Figures 2 and 3 are perspective views of the clamp;
Figure 4 shows the clamp closed and fixed to a pipe;
Figures 5 and 6 show the clamp fitted to a fixing plug;
Figures 7 and 8 show the clamp fitted to a support plate for a screw.

### DESCRIPTION OF A PREFERRED EMBODIMENT

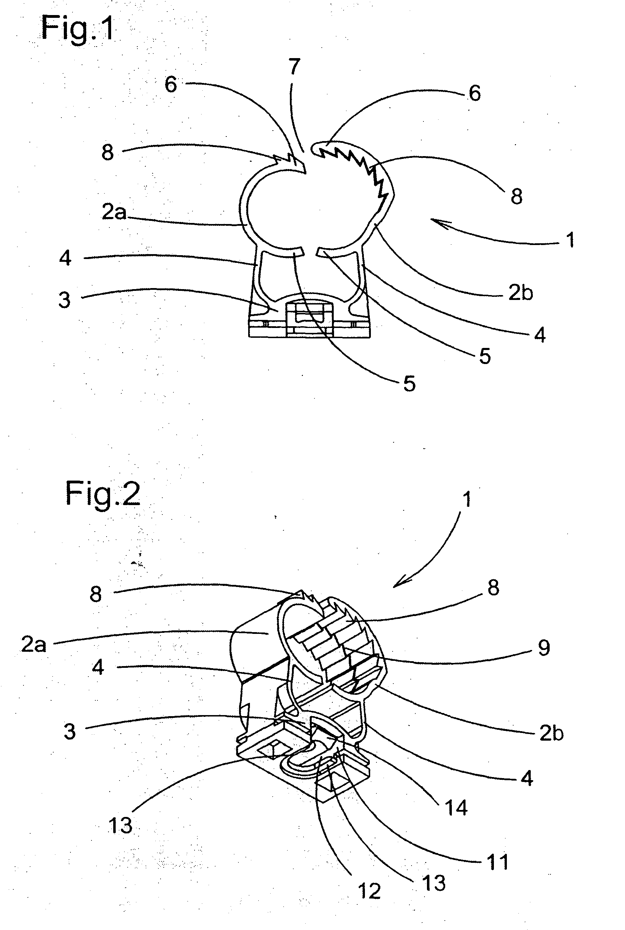

As shown in figure 1, the clamp 1 of the invention comprises a pair of arms 2a, 2b, one of the arms 2b being longer than the other. Both arms 2a, 2b are attached to a fixing base 3 by means of struts 4, and they include a lower 5 and an upper 6 portion.

As it can be seen, the longer arm 2b defines a vertical opening 7 with regard to the other arm 2a, said opening 7 is wide enough to allow introducing the pipe therein, without having to open the arms 2a, 2b manually. The pipe displaces the arms 2a, 2b by sliding them over its surface, and, due to the width of the opening 7, the arms are not bent inwards, but they are displaced laterally and they are opened. To make the introduction of the pipe 10 in the clamp 1 easier, the upper end 6 of the longer arm 2b is rounded to allow the pipe sliding under it.

Figure 2 shows teeth 8 present in the upper ends 6 of each arm 2a, 2b, which block the clamp 1 when closed.

Said teeth 8 have an intermediate step 9 that, once both arms 2a, 2b are attached, prevents transversal displacement between them.

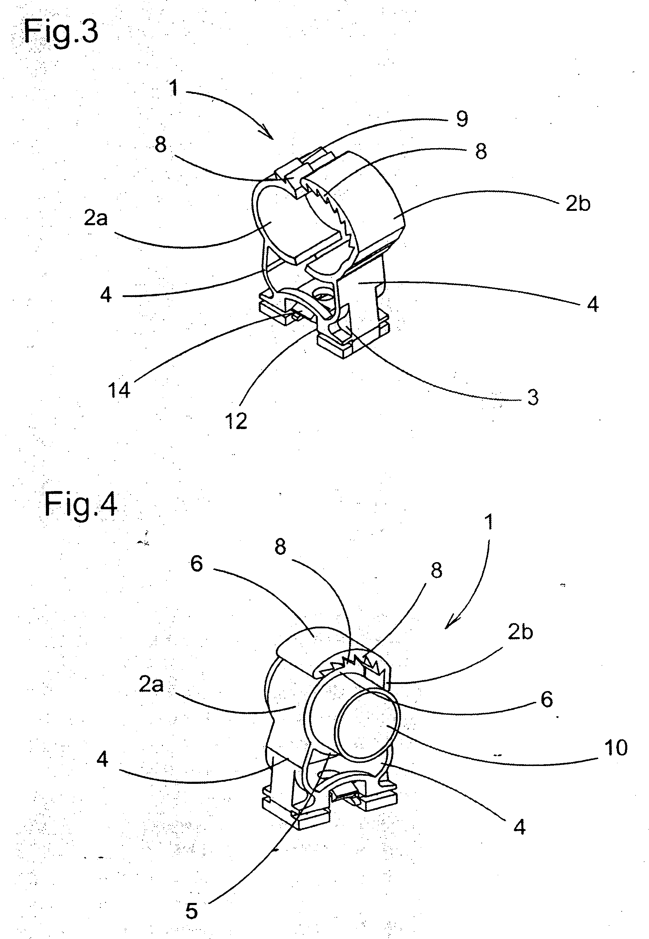

Operation of the clamp 1 is shown in figure 4. The pipe 10 has been introduced by the opening 7, pushing it towards the base 3, in such a way that the arms 2a, 2b are opened sliding over its surface. Once it is situated between both arms 2a, 2b, the pipe 10 is pushed against the lower ends 5, creating a leverage effect that moves the upper ends 6 of both arms 2a, 2b closer to each other until the teeth 8 present in each one of them are automatically coupled.

Therefore, the pipe 10 is perfectly fastened, and the struts 4 carry out a supplementary lateral force which presses the arms 2a, 2b against the pipe 10.

The fact that the struts 4 have a constant thickness causes a larger force applied against the pipe 10, since the pressure is more uniform that if the struts 4 had articulations or narrowings.

Therefore, due to the struts 4 and to the longer arm 2b, which provides a more flexible geometry, the same clamp 1 can be used for fixing in the same way pipes with considerably different diameters. The fact that the longer arm 2b has more teeth 8 than the shorter arm 2a allows blocking the arms 2a, 2b in more positions to adapt them in an optimal way to the diameter of the fixed pipe.

The way of fixing the clamp 1 to a wall or the like will be explained below.

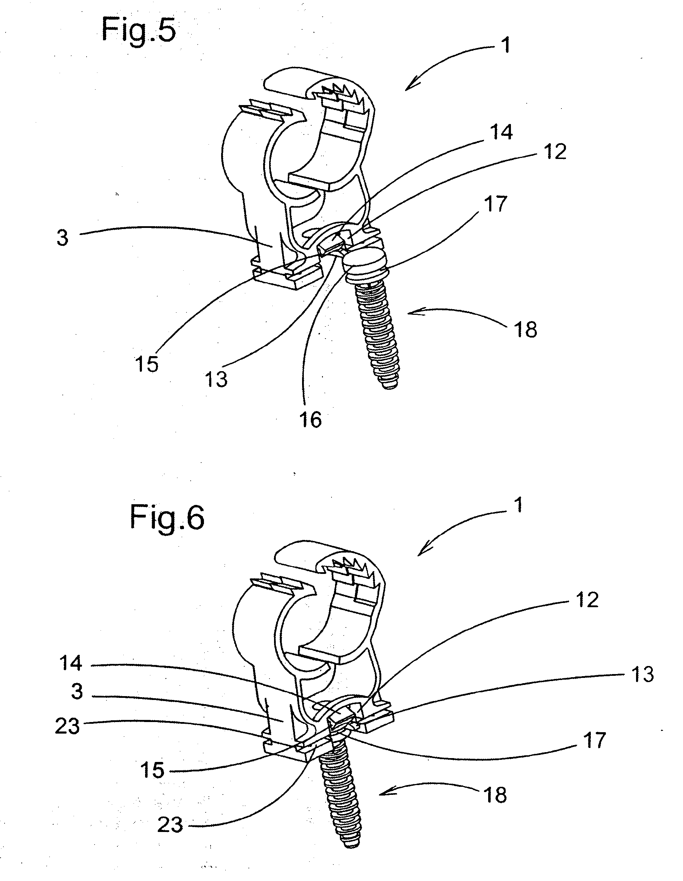

As it can be seen in figures 2 and 5, the base 3 of the clamp 1 is provided with a lateral opening 11 which defines a tunnel 12 that includes, in each of its lateral walls, ribs 13. In the upper part of said tunnel there is a flexible flange 14 provided with a rim 15 in its front end.

There is provided a plug 18, which will be fixed to the wall, to fix the clamp 1 to the wall (figures 5 and 6). The plug 18 is provided with a head 16 which includes a perimeter groove 17 that is introduced inside the tunnel 12, in such a way that the perimeter groove 17 slides longitudinally along the ribs 13, and the flange 14 is displaced upwards. When the plug 15 reaches the end of the tunnel 12, the flange 14 goes down again and the rim 15 blocks the plug 18 in said position.

As shown, the pipe 1 is fixed in a quick and easy way, sliding it over the head 16 of the plug 18 until it is blocked, without having to use any device.

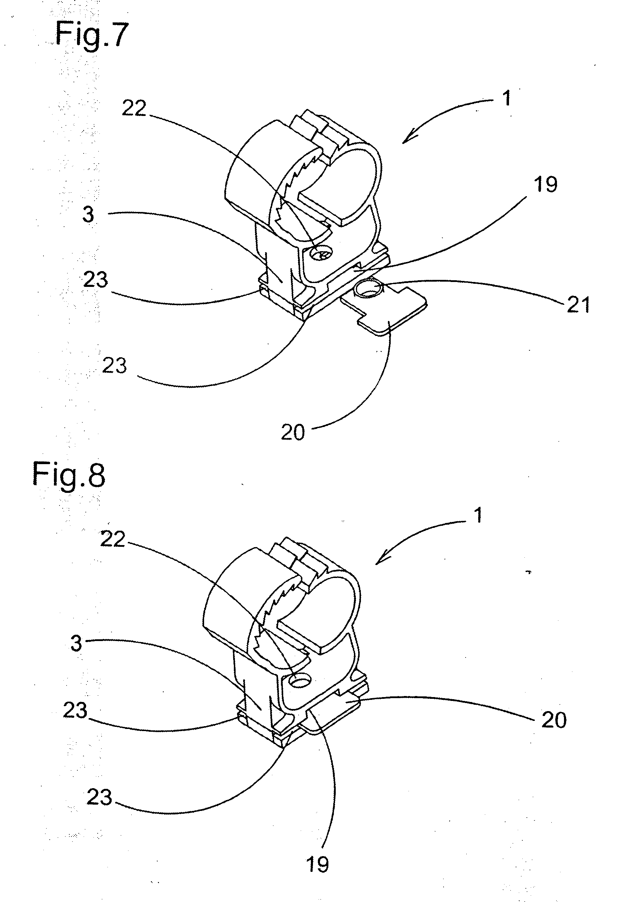

In the case that it is necessary to fix the clamp to a wall or the like by screwing it, the solution described in figures 7 can 8 can be taken.

A metallic plate 20 provided with a treaded orifice 21 is introduced into a groove 19 at the opposite side of the opening 11 of the base 3, which also communicates with the tunnel 12, until it is aligned with another vertical orifice 22 formed through the base 3. Thus, said plate acts as a support if the clamp 1 has to be fixed by screwing it, since the screw would be coupled to the orifice 22 of the plate 20 through the vertical orifice 22 of the base 3.

In addition, the base 3 of the clamp comprises a pair of longitudinal grooves 23 to fix them to a U-shaped profile, which makes attaching it easier.

## Claims

1. Clamp (1) for pipes (10) and the like, comprising two lateral arms (2a, 2b) for fixing the pipe (10) between them and articulation means (4) of each arm (2a, 2b) to a fixing base (3), each of said arms (2a, 2b) including a lower end (5) closer to said base (3) which closes the arms (2a, 2b) when pushing the pipe (10) against it, and an upper end (6) farther from said base (3) which comprises means (8) for blocking both arms (2a, 2b) when they are closed, one of the arms (2b) being longer than the other one, wherein the articulation means (4) of each arm (2a, 2b) to the fixing base (3) comprise a constant thickness strut for pressing the arms (2a, 2b) against the pipe (10), **characterized in that** the upper end (6) of one of said arms (2b) is substantially farther from the base (3) than the upper end (6) of the other arm (2a) when they are not closed, in a way such that the longer arm (2b) defines a vertical opening (7) with regard to the other arm (2a), said opening (7) being wide enough to allow introducing the pipe therein by displacing the arms (2a, 2b) by sliding the pipe over its surface, the upper end (6) of the longer arm being rounded to allow the pipe sliding under it, the upper end (6) farther from said base (3) which comprises means (8) for blocking both arms (2a, 2b) having a shape in arc of a circle which radius is greater than the radius of the other arm (2a) which has a shape in arc of a circle, and the lower end (5) and the upper end (6) of the longer arm (2b) being united by a substantially straight portion, thus making it possible to fix a wide range of tube diameters.

2. Clamp (1), according to claim 1, **characterized in that** the means (8) for blocking both arms (2a, 2b) when they are closed comprise a plurality of teeth with a profile complementary to the profile of the teeth of the other arm.

3. Clamp (1), according to claim 2, **characterized in that** the teeth (8) have a longitudinal intermediate step (9) for blocking transversal displacement between the arms (2a, 2b).

4. Clamp (1), according to claims 1 to 3, **characterized in that** the fixing base (3) comprises means of attachment to a support element fixed to a wall or the like.

5. Clamp (1), according to claim 4, **characterized in that** the means of attachment comprise at least a lateral opening (11) in said base (3) which defines a tunnel (12) including a pair of walls provided with longitudinal embossments, part of the support element resting fitted to said longitudinal embossments.

6. Clamp (1), according to claim 5, **characterized in that** the longitudinal embossments comprise ribs (13).

7. Clamp (1), according to claim 5, **characterized in that** the support element comprises a plate (20) provided with an orifice (20) coupled to a screw fixed to the wall or the like.

8. Clamp (1), according to claim 6, **characterized in that** the support element comprises a plug (18) which includes in one of its ends a perimeter groove (17) for fitting it to said ribs (13) by sliding it longitudinally along them.

9. Clamp (1), according to claims 4 to 8, **characterized in that** it comprises means for blocking the support element when it is attached to the fixing base (3).

10. Clamp (1), according to claim 9, **characterized in that** the means for blocking the support element comprise a flexible flange (14) applied against its end.

11. Clamp (1), according to claims 4 to 10, **characterized in that** the means of attachment comprise a pair of longitudinal grooves (23) located in both lateral sides of the fixing base (3) for attaching it to a U-shaped profile or the like.

12. Clamp (1), according to claim 1, **characterized in that** said arc of a circle extends substantially over a square angle.

## Patentansprüche

1. Befestigungsklemme (1) für Rohre (10) und dergleichen mit zwei seitlichen Armen (2a, 2b), um das Rohr (10) zwischen ihnen zu befestigen, und Gelenkverbindungsmitteln (4) jedes Arms (2a, 2b) zu einer Befestigungsgrundplatte (3) hin, wobei jeder der Arme (2a, 2b) ein unteres Ende (5) näher der Grundplatte (3) enthält, das die Arme (2a, 2b) schließt, wenn das Rohr (10) dagegen gedrückt wird, und ein oberes Ende (6) weiter weg liegend von der Grundplatte (3), das Mittel (8) zum Blockieren beider Arme (2a, 2b) im geschlossenen Zustand enthält, und einer der Arme (2b) länger als der andere ist, und wobei die Gelenkverbindungsmittel (4) jedes Arms (2a, 2b) zur Befestigungsgrundplatte (3) hin eine Abstützung mit gleich bleibender Dicke aufweisen, um die Arme (2a, 2b) gegen das Rohr (10) zu drücken, **dadurch gekennzeichnet,**
**dass** im nicht geschlossenen Zustand das obere Ende (6) eines der Arme (2b) in einer solchen Weise im Wesentlichen weiter von der Grundplatte (3) weg liegt als das obere Ende (6) des anderen Arms (2a), dass der längere Arm (2b) eine vertikale Öffnung (7) in Bezug auf den anderen Arm (2a) begrenzt, wobei die Öffnung (7) breit genug ist, um das Einbringen des Rohrs dort hinein mittels Verdrängen der Arme (2a, 2b) durch Gleiten des Rohrs über deren Oberfläche zu ermöglichen, das obere Ende (6) des längeren Arms gerundet ist, um zu ermöglichen, dass das Rohr darunter gleitet, das von der Grundplatte (3) weiter weg befindliche obere Ende (6), das die Mittel (8) zum Blockieren beider Arme (2a, 2b) enthält, weist eine Form aus einem Kreisbogen auf, dessen Radius größer als der Radius des anderen Arms (2a) ist, der eine Form aus einem Kreisbogen auf weist, und das untere Ende (5) und das obere Ende (6) des längeren Arms (2b) durch einen im Wesentlichen geraden Teil verbunden sind, so dass es ermöglicht ist, Rohre innerhalb eines ausgedehnten Bereichs von Rohrdurchmessern zu befestigen.

2. Befestigungsklemme (1) nach Anspruch 1,
**dadurch gekennzeichnet,**
**dass** die Mittel (8) zum Blockieren beider Arme (2a, 2b) im geschlossenen Zustand aus einer Mehrzahl von Zähnen mit einem Profil bestehen, das komplementär zu dem Profil der Zähne des anderen Arms ist.

3. Befestigungsklemme (1) nach Anspruch 2,
**dadurch gekennzeichnet,**
**dass** die Zähne (8) eine längslaufende mittlere Stufe (9) aufweisen, um eine Querverschiebung zwischen den Armen (2a, 2b) zu blockieren.

4. Befestigungsklemme (1) nach den Ansprüchen 1 bis 3,
**dadurch gekennzeichnet,**
**dass** die Befestigungsgrundplatte (3) Mittel zur Befestigung an einem Tragelement aufweist, das an einer Wand oder dergleichen befestigt ist.

5. Befestigungsklemme (1) nach Anspruch 4,
**dadurch gekennzeichnet,**
**dass** die Mittel zur Befestigung mindestens eine seitliche Öffnung (11) in der Grundplatte (3) umfassen, die einen Tunnel (12) einschließlich eines Paares von Wänden bildet, die mit Längswülsten versehen sind, wobei ein Teil des Tragelements auf den Längswülsten ruhend angebracht ist.

6. Befestigungsklemme (1) nach Anspruch 5,
**dadurch gekennzeichnet,**
**dass** die Längswülste aus Rippen (13) bestehen.

7. Befestigungsklemme (1) nach Anspruch 5,
**dadurch gekennzeichnet,**
**dass** das Tragelement eine Platte (20) umfasst, die mit einer Öffnung (21) versehen ist, welche mit einer an der Wand oder dergleichen befestigten Schraube verbunden ist.

8. Befestigungsklemme (1) nach Anspruch 6,
**dadurch gekennzeichnet,**
**dass** das Tragelement aus einem Dübel (18) besteht, der an einem seiner Enden eine Umfangsnut (17) aufweist, um ihn an den Rippen (13) anzubringen, indem er längs an ihnen entlang geschoben wird.

9. Befestigungsklemme (1) nach Anspruch 4 bis 8,
**dadurch gekennzeichnet,**
**dass** sie Mittel zum Blockieren des an der Befestigungsgrundplatte (3) befestigten Tragelements aufweist

10. Befestigungsklemme (1) nach Anspruch 9,
**dadurch gekennzeichnet,**
**dass** das Mittel zum Blockieren des Tragelements aus einer flexiblen Zunge (14) besteht, die an dessen Ende anliegt.

11. Befestigungsklemme (1) nach einem der Ansprüche 4 bis 10,
**dadurch gekennzeichnet,**
**dass** die Mittel zur Befestigung ein Paar von Längsnuten (23) umfassen, die in beiden lateralen Seiten der Befestigungsgrundplatte (3) angeordnet sind, um sie an einem U-förmigen Profil oder dergleichen anzubringen.

12. Befestigungsklemme (1) nach Anspruch 1,
**dadurch gekennzeichnet,**
**dass** sich der Kreisbogen im Wesentlichen über einen 90°-Winkel erstreckt.

## Revendications

1. Bride de serrage (1) pour des tuyaux (10) et analogues, comprenant deux bras latéraux (2a, 2b) pour fixer le tuyau (10) entre eux et des moyens d'articulation (4) de chaque bras (2a, 2b) à une base de fixation (3), chacun desdits bras (2a, 2b) comprenant une extrémité inférieure (5) plus proche de ladite base (3) qui ferme les bras (2a, 2b) quand on pousse le tuyau (10) contre elle, et une extrémité supérieure (6) plus loin de ladite base (3) qui comprend des moyens (8) pour bloquer les deux bras (2a, 2b) quand ils sont fermés, un des bras (2b) étant plus long que l'autre bras, dans laquelle les moyens d'articulation (4) de chaque bras (2a, 2b) à la base de fixation (3) comprennent une entretoise d'épaisseur constante pour presser les bras (2a, 2b) contre le tuyau (10), **caractérisée en ce que** l'extrémité supérieure (6) de l'un desdits bras (2b) est sensiblement plus éloignée de la base (3) que l'extrémité supérieure (6) de l'autre bras (2a) quand ils ne sont pas fermés, d'une façon telle que le bras le plus long (2b) définisse une ouverture verticale (7) par rapport à l'autre bras (2a), ladite ouverture (7) étant assez large pour permettre d'introduire le tuyau à l'intérieur en déplaçant les bras (2a, 2b) en faisant glisser le tuyau sur sa surface, l'extrémité supérieure (6) du bras le plus long étant arrondie pour permettre au tuyau de coulisser en dessous, l'extrémité supérieure (6) plus éloignée de ladite base (3) qui comprend des moyens (8) pour bloquer les deux bras (2a, 2b) ayant une forme en arc de cercle dont le rayon est plus grand que le rayon de l'autre bras (2a) qui a une forme en arc de cercle, et l'extrémité inférieure (5) et l'extrémité supérieure (6) du bras plus long (2b) étant réunies par une partie sensiblement droite, rendant ainsi possible de fixer une grande plage de diamètres de tubes.

2. Bride de serrage (1) selon la revendication 1, **caractérisée en ce que** les moyens (8) pour bloquer les deux bras (2a, 2b) quand ils sont fermés comprennent une pluralité de dents avec un profil complémentaire au profil des dents de l'autre bras.

3. Bride de serrage (1), selon la revendication 2, **caractérisée en ce que** les dents (8) ont un gradin longitudinal intermédiaire (9) pour bloquer le déplacement transversal entre les bras (2a, 2b).

4. Bride de serrage (1), selon les revendications 1 à 3, **caractérisée en ce que** la base de fixation (3) comprend des moyens d'attachement à un élément de support fixé à un mur ou analogues.

5. Bride de serrage (1), selon la revendication 4, **caractérisée en ce que** les moyens d'attachement comprennent au moins une ouverture latérale (11) dans ladite base (3) qui définit un tunnel (12) comprenant une paire de parois munies de bossages longitudinaux, faisant partie de l'élément de support reposant de manière ajustée sur lesdits bossages longitudinaux.

6. Bride de serrage (1), selon la revendication 5, **caractérisée en ce que** les bossages longitudinaux comprennent des nervures (13).

7. Bride de serrage (1), selon la revendication 5, **caractérisée en ce que** l'élément de support comprend une plaque (20) munie d'un orifice (20) couplé à une vis fixée au mur ou analogues.

8. Bride de serrage (1), selon la revendication 6, **caractérisée en ce que** l'élément de support comprend un bouchon (18) qui comprend dans une de ses extrémités une rainure périphérique (17) pour l'ajuster auxdites nervures (13) en le faisant coulisser de manière longitudinale le long de celles-ci.

9. Bride de serrage (1), selon les revendications 4 à 8, **caractérisée en ce qu'**elle comprend des moyens pour bloquer l'élément de support quand il est attaché à la base de fixation (3).

10. Bride de serrage (1), selon la revendication 9, **caractérisée en ce que** les moyens pour bloquer l'élément de support comprennent une collerette flexible (14) appliquée contre son extrémité.

11. Bride de serrage (1), selon les revendications 4 à 10, **caractérisée en ce que** les moyens d'attachement comprennent une paire de rainures longitudinales (23) situées des deux côtés latéraux de la base de fixation (3) pour l'attacher à un profilé en forme de U ou analogues.

12. Bride de serrage (1), selon la revendication 1, **caractérisée en ce que** ledit arc de cercle s'étend sensiblement à angle droit.
